# EUROPEAN PATENT SPECIFICATION

(11) **EP 1 573 129 B1**
(45) Date of publication and mention of the grant of the patent: **05.10.2011**
(21) Application number: 03781228.6
(22) Date of filing: 18.12.2003
(51) Int. Cl.: D21H 19/10, D21H 19/34, D21H 19/36, D21H 19/52, D21H 17/02

(54) **FIBER SUSPENSION OF ENZYME TREATED SULPHATE PULP AND CARBOXYMETHYLCELLULOSE FOR SURFACE APPLICATION IN PAPERBOARD AND PAPER PRODUCTION.**
FASERSTOFFSUSPENSION AUS ENZYMBEHANDELTEMSULPHATZELLSTOFF UND CARBOXYMETHYLCELLULOSE ZUR OBERFLÄCHLICHEN ANWENDUNG BEIDER HERSTELLUNG VON PAPIER UND PAPPE
SUSPENSION FIBREUSE DE PATE AU SULFATE ET CARBOXYMETHYLCELLULOSE TRAITEE PAR ENZYME POUR APPLICATION EN SURFACE DANS LA PRODUCTION DE CARTON ET DE PAPIER

(30) Priority: 18.12.2002 SE 0203743
(43) Date of publication of application: 14.09.2005
(73) Proprietor: Korsnäs AB (publ), 801 81 Gävle (SE)
(72) Inventor: DELIN, Malin, S-SE-802 53 GÄVLE (SE); WIKSTRÖM, Magnus, S-SE-113 36 STOCKHOLM (SE)
(74) Representative: Johansson Webjörn, Ingmari
(86) International application number: PCT/SE2003/001999
(87) International publication number: WO 2004/055267

(56) References cited:
- EP-A1- 1 036 799
- US-A- 5 770 012
- US-A- 6 017 870
- US-A- 2002 084 046
- DATABASE WPI Week 199103, Derwent Publications Ltd., London, GB; Class D16, AN 1991-019717, XP002972882 & JP 2 293 494 A (IZUMI SHOKUHIN KK) 04 December 1990

## Description

The present invention relates to an applicable aqueous fiber suspension comprising cellulase enzyme-treated microfibrillar sulphate pulp (eMFC) and carboxymethylcellulose (CMC), and to the use of such an applicable aqueous fiber suspension for application on a paper or board web as a coating in paperboard or paper production.

### Background

One of the essential driving forces in the development work concerning package products having papermaking pulp as main raw material (e.g. paperboard, sack paper and corrugated fiberboard) is to maximize the strength properties of the package material without increasing the weight of the package. This is important for an efficient utilization of raw material as well as for utilization of transports.

The strength properties of such package products depend among other things on the number of bonds between individual fibers, the strength and form of the fibers, the density distribution in the thickness direction and distribution of the orientation of the fibers in different directions, as well as how the fiber matrix has contracted during the drying process. It is a general opinion that bonds between fibers are created predominantly through intramolecular hydrogen bond formation during the drying process (Clark 1985). The contact surfaces between fibers and the chemical composition of the fiber surfaces are important in this context (Nissan 1977, Robinson 1980). Beating reveals the fibrills and microfibrills on the fiber surfaces. The amount of and the dispersion and disintegration of the fibrills and microfibrills are considered to be of essential importance for the binding force between fibers (Mitikka-Eklund et al. 1999).

A considerable part of the package materials of today must also be able to carry a high-class print. This will require a good print surface so that the print can be applied in a rational and cost effective way. Achievement of such a print surface on e.g. board products is in many cases made at the expense of strength properties such as bending force and tensile stiffness. Thus, the requirement of a high-class print has an influence on the strength of the package material at a given grammage. For example, it is common to apply 10-20 g/m² of a pigment-based coating onto the print side of the board product in order to create a high-class print surface. If the fiber grammage had been increased by 10-20 g/m² instead, the strength properties of the package had increased considerably much more.
For non-pigment-coated board products other adaptations are made on the expense of the strength properties of the layer that will be the carrier of the print, e.g. with regard to the ratio of mixing of hard and soft wood fibers, beating strategies and addition of inorganic fillers.

The print surface can be improved by calendering, i.e. having a comparatively dry paperboard web to pass through one or several press roll nip(s). By this procedure a smoother print surface can be created, but since the entire board structure is compressed in the thickness direction, this is often achieved on the expense of the bending stiffness. If the print surface is brought into contact with a heated press roll during the calendering operation, the surface is softened and thus becomes more deformable than the inner structure of the paper, i.e. so-called temperature gradient calendering. This means that the surface can be smoothened at a lower press-pressure, which is favorable for retaining the bending force (Moreau-Tabiche et al. 1991, Wikström 1999). Document JP-A-2293494 discloses a process, in which paper stock or dried paper sheet is treated with cellulase, giving a paper with enhanced printability without calendering or surface treatment.

From the above it is evident that it is desirable to find a method of producing a high-class print surface without having to compromise with the strength properties in relation to the grammage.

### Description of the invention

The present invention provides an applicable aqueous fiber suspension that can be used for application on a paper or board web as a coating. The resulting paper or board product is suitable for high-class printing without loss of strength properties in relation to the grammage.

The applicable fiber suspension of the invention is based on cellulase enzyme-treated microfibrillar sulphate pulp (eMFC) and carboxymethylcellulose (CMC).

The term "microfibrillar cellulose (MFC)" is here intended to describe wood fibers that have been disintegrated to small fragments with a large proportion of the microfibrills of the fiber wall uncovered. In addition, a large amount of very fine material is formed. The fragments and the fines can thus, if they are applied in the right way, contribute to the creation of a closed surface structure with reduced surface porosity and a smoother board surface. Furthermore, the uncovered microfibrills on the fines contribute to strengthen the fiber-fiber bonds that are developed during the drying process of the coating suspension.

Common microfibrillar cellulose (MFC) can be produced by mechanically disintegrating the fibers. This technique has been tried in the Recell project at the Institute for Fiber and Polymer Technology (www.nutek.se). The MFC is in this case produced with the aid of a bead beater. The result from the project indicates that mechanically produced MFC pulp has a high specific surface that gives a strong binding capacity in the paper structure, high water retention values, good stability in water dispersions and is an insoluble adhesive in colloidal form that does not give the environmental drawbacks as soluble alternatives such as starch-based preparations.

The cellulose fibers can also be disintegrated to microfibrillar cellulose by enzyme treatment, especially treatment with cellulases. This type of microfibrillar cellulose is herein designated eMFC. Enzymes have a totally different effect on the fibers than a beater, and therefore there are essential differences between the resulting two types of microfibrillar cellulose. The method of producing eMFC by enzyme treatment is an essential part of the manufacturing process of the new type of fiber suspension according to the present invention.

The present invention comprises a special, applicable fiber suspension that has several different applications in the manufacturing of paper and paperboard products. The suspension comprises fibers from sulphate pulp that have been subjected to a special enzyme treatment and that have subsequently been dispersed and stabilized with carboxymethylcellulose (CMC).

The applicable aqueous fiber suspension of the invention is produced by treatment of sulphate pulp with the enzymes endoglucanase and cellobiohydrolase followed by addition of carboxymethylcellulose (CMC). The enzyme treated hard or soft wood fibers give a combination of properties regarding surface charge, flexibility, thermal softening properties, particle size and particle size distribution that substantially differ from conventional sulphate pulp. The enzyme treated fibers of the invention result in microfibrillar cellulose (eMFC). More precisely, the eMFC designates cellulose fibers that have been disintegrated by enzymatic treatment to small fragments with a large proportion of the microfibrills of the cell wall uncovered. Furthermore, a large amount of very fine material is formed. The fragments and the fines contribute to reduction of the surface porosity and creation of a smoother surface. The uncovered microfibrills contribute to strengthening the fiber-fiber bonds that develop during the drying process. From the results presented in the examples below it is evident that CMC interacts with the eMFC so that a suspension having good rheological properties is obtained. Further, and perhaps most importantly, the results show that dispersing of eMFC with CMC contributes to increased binding strength when the suspension is dried as a separate layer on a paper board surface or paper surface. It is likely an effect of that CMC disperses microfibrills that are formed as a result of the enzyme treatment. Microfibrills, and in particular well-dispersed disintegrated microfibrills, have a marked effect on the creation of strong interfibrillar bonds (Mitikka-Eklund et al. 1999). The fiber suspension in question has proven to have a positive influence on the product properties in different applications in the manufacture of paper and paperboard. The major principles are expressed in general below. Thereafter the obtained results and merits are presented more in detail:
- Application on dried paper and board web with the aid of blade coating to create a surface with high surface strength that in addition deforms more easily than conventional fibers of bleached sulphate pulp by calendering at high temperatures.
- Application on a wet paper and board web before the press section to create a surface with high surface strength that in addition deforms more easily than conventional fibers of bleached sulphate pulp by calendering at high temperatures.

Thus, the present invention is directed to an applicable aqueous fiber suspension comprising cellulase enzyme-treated microfibrillar sulphate pulp (eMFC) and carboxymethylcellulose (CMC) and having rheological properties similar to a pigment coating colour for paper products.

In an embodiment of the invention the cellulase enzyme is endoglucanase and/or cellobiohydrolase, and the CMC has an average molecular weight of more than 50 000, and the suspension has a viscosity in the range of 100 to 3000 mPas (Brookfield, 100 r.p.m. sp₄).

In a preferred embodiment of the invention the sulphate pulp is a bleached sulphate pulp.

In another preferred embodiment the dry weight of the suspension is in the range of 2 to 15%.

In yet another embodiment of the invention the suspension additionally comprises inorganic coating pigments and/or fillers.

The present invention is also directed to the use of an applicable aqueous fiber suspension according to the invention for application on a paper or board web in wet or dry state as a coating. In "wet state" refers to application before the press section in the paper or board machine (solid content of <20%), whereas in "dry state" refers to application after the dryer section (solid content of >90%).

The invention will now be illustrated with the aid of the examples and the drawings, but it should be understood that the scope of protection is not limited to any specifically mentioned details.

### Description of the drawings

**Figure 1** is a diagram that shows fiber shortening (average fiber length) during and after enzyme treatment for various enzyme treatment durations (1-6 hours). The enzyme dosage was 10 g/kg for all test points except for B06 where the enzyme dosage was increased to 15 g/kg.
**Figure 2a** shows a SEM picture at 200 times magnification of an uncalendered sample without eMFC coating as a reference.
**Figure 2b** shows a SEM picture at 200 times magnification of an uncalendered sample without eMFC coating.

### Examples

First the preparation of the applicable aqueous fiber suspension is described and then examples are given of its applications.

### Preparation of fiber suspension

A typical example of the procedure for preparation of the applicable aqueous fiber suspension of the invention for blade coating of a board in pilot scale is described. The proportions and treatment times are optimized for the respective applications mentioned below, but the procedure and the added materials are the same for each application.

The enzyme used was Ecostone L900 from Röhm Enzyme Finland Oy and it consists essentially of two cellulases, namely cellobiohydrolase and endoglucanase. ECF bleached softwood sulphate pulp having a dry content of 34% was withdrawn from the press filter of Korsnäs board machine PM5. The CMC quality was FF10 from Noviant AB having an average molecular weight of 66 000.

Approximately 150 liters of water was heated to 55°C in a double-jacket mixer for controlled temperature regulation and the pH was adjusted to 4.8 with citric acid since the pH was expected to rise at the addition of the pulp. Then 24 kg of dry pulp was successively added. The enzyme was added when approximately half of the amount of pulp had been mixed in, followed by addition of the remaining amount of pulp during two hours. Altogether 66 g of citric hydrate was required to keep the pH between 5 and 5.5 during the enzyme treatment. When the enzyme treatment had proceeded for 7 hours, the treatment was stopped by raising the pH to 9.5 for 20 minutes by addition of sodium hydroxide, 0.5 mole.

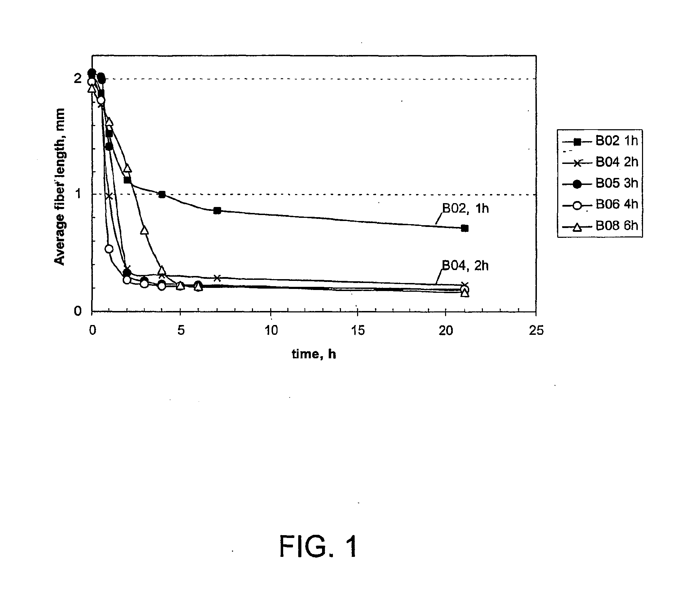

Figure 1 shows how the average fiber length varied during the enzyme treatment. Finally, 9.6 kg of CMC was added under vigorous stirring maintained for 45 minutes. The eMFC mixture, having a dry content of 15% was then ready for pilot coating.

### Example 1 Application of fiber suspension by blade coating on dry material web

Application on dried paper and paperboard web with the aid of blade coating for obtaining a high surface strength and improved print surface and thus possibilities for new board products with high-class printing properties without pigment coating.

In this example the coating was made in pilot scale with a cellulose-based coating system. The work was started with experiments in laboratory scale. This included among other things adjustment of the enzyme treatment so that fibers having the correct average fiber length could be produced for this application (approx. 200 µm). Then the concentration and addition of CMC was optimized with the aid of rheological measurements and by making draw-downs using a bench coater. The CMC addition is essential for obtaining a stabilized fiber suspension having a rheology enabling application in a coating operation.

The results from the experiments in laboratory scale gave the basis for finding the right conditions for the experiments in pilot scale. For the experiment in pilot scale a coating suspension with addition of 28 % by weight of absolutely dry CMC, which corresponds to 40 pph ("parts per hundred" in relation to eMFC). The dry content of the coating mixture became 13% and the viscosity 2700 mPas (Brookfield 100 r.p.m., sp. 4). The pilot coating was applied on a pre-calendered base paper to CLC/C 190 g/m², with a bent blade at a speed of 250 m/min.

Samples of the coating mixture from the return beneath the blade resulted in a stabilized water retention. A smooth, but somewhat difficult to dry, coating layer was achieved. After calendaring at a linear load of 150 kN/m and 250°C with LN-nip (i.e. extended soft calender nip cf. Wikström et al. 1997, Moreau-Tabiche et al. 1999) the eMFC coated samples showed improvements regarding surface strength (IGT), gloss and roughness (Bendtsen and PPS) compared to the calendered uncoated reference, see Table 1. The optical properties such as e.g. brightness was, however, somewhat deteriorated as a result of the eMFC coating.

**Table 1. Testing of coating with eMFC coating mixture and hot calendering in pilot scale. As substrate, a three-layered base board for liquid packages having a grammage of 190 g/m². The coating was made at 250 m/min. The calendering was made with a LN calender at 250°C and line load of 150 kN/m.**

| | 3-5 g/m² eMFC coating mix | 3-5 g/m² eMFC coating mix | Uncoated reference |
|---|---|---|---|
| IGT surface strength, m/s | 6,1 | 4,8 | < 2 |
| Gloss, % | 31 | 28 | 17 |
| Bendtsen, ml/min | 134 | 175 | 412 |
| PPS, µm | 3.4 | 3.4 | 5.2 |
| Whiteness, % | 60.4 | 61.2 | 63.3 |
| Brightness, %ISO | 70.9 | 71.4 | 72.4 |
| Abs Bristow 1cm/s, g/m² | 12.9 | 12.6 | 7.8 |
| Bending force MD, mN | 92 | 99 | 95 |
| Bending force CD, mN | 40 | 40 | 41 |
| SCT-MD, kNm/kg | 5.7 | 6.3 | 5.7 |
| SCT-CD, kNm/kg | 3.9 | 4.1 | 3.7 |

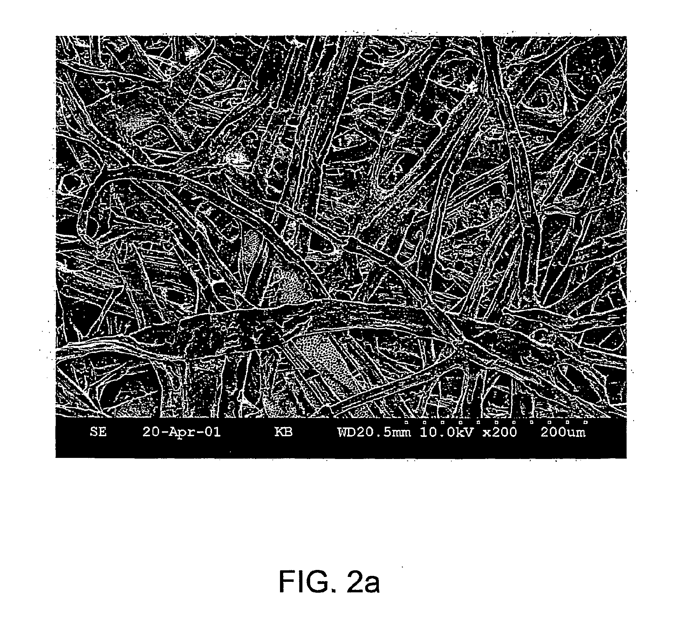

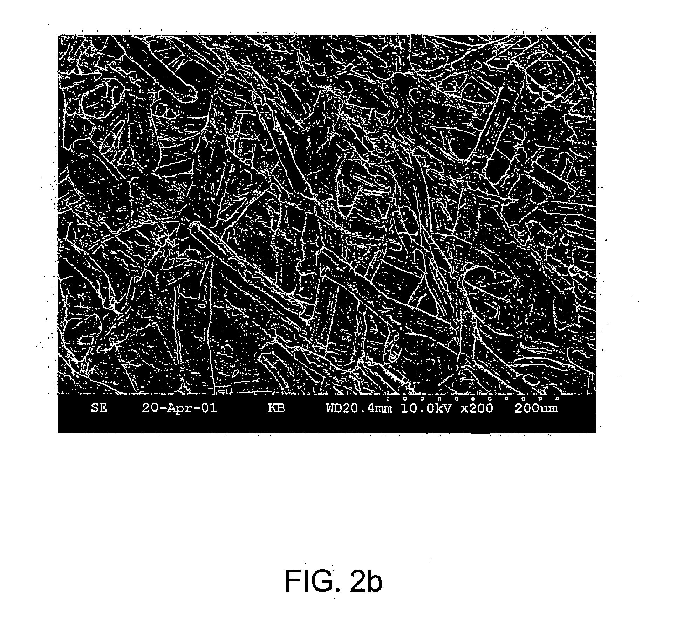

The figures 2a and 2b shows SEM pictures at 200 times magnification of the uncalendered samples with and without eMFC coating. It can be seen that extra material has been added to the surface of the board.

Additional experiments were performed in pilot scale to be able to test print in flexo, as well as tests with addition of ground calcium carbonate (GCC) in order to increase the dry content of the coating mixture and thereby enabling an increased transfer of eMFC.

Three coating mixtures were prepared in pilot scale, two with eMFC, one of which with addition of CMC and the other with addition of CMC and ground calcium carbonate. The third coating mixture consisted of water and CMC solely, in order to find out how great the influence of the CMC has on the coating result. The coating mixtures were coated on base board followed by LN calendering and printing in a flexographic printing press.

The coatings containing eMFC showed again positive results with regard to surface strength, surface roughness and gloss. The roughness of the board was clearly reduced when the coating mixtures containing eMFC were used for coating as compared to the calendered uncoated board.

The results from the coating with only CMC showed the opposite. This emphasizes that the lower roughness of the board coated with the eMFC coating mixtures was not an effect of CMC but must be described to the enzyme-treated microfibrillar cellulose. The coating with eMFC seems to give a certain filling-in of the pore structure of the base board.

Table 2 shows the variance in surface profile on samples that have been coated with eMFC coating mixture and uncoated samples. The surface profile variations have been divided into different size classes with the aid of FFT analysis. In Table 2 the two smallest size classes (62-125 µm and125-250 µm) are shown. The variations were clearly less for the eMFC coated samples both before and after the calendering.

**Table 2. The variance in µm² (measured with a UBM instrument) for the uncalendered and calendered samples in the two most fine scaled band groupings. OB5 and OB4 the respective uncoated references to the eMFC coated samples 1/MFC and 3/CMC. " 2/GCC is an extra trail point where ground calcium carbonate had been added to the eMFC coating mixture.**

| | Band grouping (µm) | OB5 | 1/MFC | 2/GCC | OB4 | 3/CMC |
|---|---|---|---|---|---|---|
| Uncalendered | 62-125 | 1.7 | 1.4 | 1 | 1.3 | 1.4 |
| | 125-250 | 3.1 | 2.7 | 2.2 | 2.6 | 2.9 |
| | | | | | | |
| LN calendered | 62-125 | 1.2 | 0.8 | 0.6 | 0.8 | 1.1 |
| | 125-250 | 1.6 | 1.0 | 0.9 | 1 | 1.6 |

A panel evaluation of the print results indicated that the coated samples gave a better printing result than the corresponding uncoated qualities. The experiment with ground calcium carbonate did not give any increased transfer of the cellulose-containing coating mixture and therefore no improvement of the properties (except for a certain improvement regarding the brightness). Perhaps it would be desirable to be able to increase the amount of coating to get greater effect of the eMFC coating mixture when it is applied onto a dry board web, but there is a difficulty in transferring more eMFC to the board surface without using a great proportion of water and CMC.

### Example 2 Application on wet paper and board web.

The suspension can also be applied when the web is in wet state, i.e. before the press section with the objective to create a high surface strength and improved print surface. This procedure has the potential for obtaining board products with sufficient printing properties without pigment coating, as indicated by some minor laboratory experiments that have been performed for this approach.

### References

Mitikka-Eklund M, Mari Halttunen, Melander M, Ruuttunen K. and Vourinen T. (1999): "Fibre engineering", 10th International symposium on wood and pulping chemistry, Yokohama, Japan, vol. 1, pp 432.
Moreau-Tabiche S., Maume J. P., Morin V., Piette P., Gurein D. and Chaussy D. (1999): "Wood containing paper pilot calendering: obtaining results through super calendering, soft nip calendering and extended nip concept", Proc. 1999 PTS Coating Symposium, PTS, München, , 43E.
Nissan A, (9977): "Lectures in fiber science in paper, in Pulp and Paper Technology series (W.C. Walker ed.), TAPPI PRESS, Atlanta.
Ohlsson J., Gabrielli I., Thilén M. (2000): "Förnyelsebara material", Struktur 1, 3-5
Robinson J.V., (1980): "Fiber bonding", in Pulp and paper chemistryand chemical technology, Vol. 2, (J.P: Casey, Ed.), John Wiley and Son, New York, p. 915.
Wikström M. (1999): "Influence of temperature and pressure pulses on the calendering result", Doctor of Technology Thesis, Royal Institute of Technology, Stockholm Wikström M., Nylund T. and Rigdahl, M. (1997): "Calendering of coated paper and board in an extended soft nip", Nordic Pulp Paper Res. J., 12:4, p. 289 http://www.nutek.se/information/tit/398/cellulosa.html. "Ny energisnål process", 2000-10-05.

## Claims

1. Applicable aqueous fiber suspension comprising cellulase enzyme-treated microfibrillar sulphate pulp (eMFC) and carboxymethylcellulose (CMC) and having rheological properties similar to a pigment coating colour for paper products.

2. Applicable aqueous fiber suspension according to claim 1, wherein the cellulase enzyme is endoglucanase and/or cellobiohydrolase, and the CMC has an average molecular weight of up to 150 000, and the suspension has a viscosity in the range of 100 to 3000 mPas (Brookfield, 100 r.p.m. sp₄).

3. Applicable aqueous fiber suspension according to claim 1 or 2, wherein the sulphate pulp is a bleached sulphate pulp.

4. Applicable aqueous fiber suspension according to any one of claims 1-3, wherein the dry weight of the suspension is in the range of 2 to 15 %.

5. Applicable aqueous fiber suspension according to any one of claims 1-4, wherein the suspension additionally comprises inorganic coating pigments and/or fillers.

6. Use of an applicable aqueous fiber suspension according to any one of claims 1 - 5 for application on a paper or board web as a coating.

7. Use of an applicable aqueous fiber suspension according to claim 6, wherein the paper or board web is a dry paper or board web having a solid content of >90 % .

8. Use of an applicable aqueous fiber suspension according to claim 6, wherein the paper or board web is a wet paper or board web having a solid content of <20 %.

## Patentansprüche

1. Auftragsfähige wässrige Faserstoffsuspension, die Cellulaseenzym-behandelten mikrofibrillären Sulfatzellstoff (eMFC) und Carboxymethylcellulose (CMC) umfasst und rheologische Eigenschaften aufweist, die einer Pigmentstreichfarbe für Papierprodukte ähneln.

2. Auftragsfähige wässrige Faserstoffsuspension nach Anspruch 1, wobei das Cellulaseenzym Endoglucanase und/oder Cellobiohydralase ist und die CMC ein durchschnittliches Molekulargewicht von bis zu 150.000 aufweist und die Suspension eine Viskosität im Bereich von 100 bis 3000 mPas (Brookfield, 100 Umin⁻¹ Sp₄) besitzt.

3. Auftragsfähige wässrige Faserstoffsuspension nach Anspruch 1 oder 2, wobei der Sulfatzellstoff ein gebleichter Sulfatzellstoff ist.

4. Auftragsfähige wässrige Faserstoffsuspension nach einem der Ansprüche 1 bis 3, wobei die Trockenmasse der Suspension im Bereich von 2 bis 15 % liegt.

5. Auftragsfähige wässrige Faserstoffsuspension nach einem der Ansprüche 1 bis 4, wobei die Suspension zusätzlich anorganische Streichpigmente und/oder Füllstoffe umfasst.

6. Verwendung einer auftragsfähigen wässrigen Faserstoffsuspension nach einem der Ansprüche 1 bis 5 für den Strichauftrag auf eine Papier- oder Kartonbahn.

7. Verwendung einer auftragsfähigen wässrigen Faserstoffsuspension nach Anspruch 6, wobei die Papier-oder Kartonbahn eine trockene Papier- oder Kartonbahn ist, die einen Feststoffgehalt von >90 % aufweist.

8. Verwendung einer auftragsfähigen wässrigen Faserstoffsuspension nach Anspruch 6, wobei die Papier-oder Kartonbahn eine feuchte Papier- oder Kartonbahn ist, die einen Feststoffgehalt von <20 % aufweist.

## Revendications

1. Suspension aqueuse de fibres pouvant être appliquée, comprenant une pâte au sulfate microfibrillaire traitée par une enzyme cellulase (eMFC) et de la carboxyméthylcellulose (CMC) et ayant des propriétés rhéologiques similaires à celles d'une couleur de revêtement pigmentaire pour produits en papier.

2. Suspension aqueuse de fibres pouvant être appliquée selon la revendication 1, dans laquelle l'enzyme cellulase est une endoglucanase et/ou cellobiohydrolase, et la CMC a une masse moléculaire moyenne allant jusqu'à 150 000, et la suspension a une viscosité située dans la plage allant de 100 à 3000 mPa.s (Brookfield, 100 t/min, sp₄).

3. Suspension aqueuse de fibres pouvant être appliquée selon la revendication 1 ou 2, dans laquelle la pâte au sulfate est une pâte de sulfate blanchie.

4. Suspension aqueuse de fibres pouvant être appliquée selon l'une quelconque des revendications 1 à 3, dans laquelle le poids à sec de la suspension est situé dans la plage allant de 2 à 15 %.

5. Suspension aqueuse de fibres pouvant être appliquée selon l'une quelconque des revendications 1 à 4, laquelle suspension comprend de plus des charges et/ou pigments de revêtement inorganiques.

6. Utilisation d'une suspension aqueuse de fibres pouvant être appliquée selon l'une quelconque des revendications 1 à 5, pour une application sur une bande de papier ou de carton sous la forme d'un revêtement.

7. Utilisation d'une suspension aqueuse de fibres pouvant être appliquée selon la revendication 6, dans laquelle la bande de papier ou de carton est une bande de papier ou de carton sec ayant une teneur en extrait sec supérieure à 90 %.

8. Utilisation d'une suspension aqueuse de fibres pouvant être appliquée selon la revendication 6, dans laquelle la bande de papier ou de carton est une bande de papier ou de carton humide ayant une teneur en extrait sec inférieure à 20 %.
